# EUROPEAN PATENT APPLICATION

(11) **EP 4 044 031 A1**
(43) Date of publication of application: **17.08.2022**
(21) Application number: 21801819.0
(22) Date of filing: 01.03.2021
(51) Int. Cl.: G06F 9/50

(54) **CLOUD ORCHESTRATION SYSTEM AND METHOD BASED ON READ-WRITE SEPARATION AND AUTO-SCALING**

(30) Priority: 16.12.2020 CN 202011492220
(71) Applicant: KUYUN (SHANGHAI) INFORMATION TECHNOLOGY CO., LTD., Shanghai 200120 (CN)
(72) Inventor: ZHAN, Shaoxiong, Shanghai 200120 (CN); FENG, Jinghua, Shanghai 200120 (CN); JIN, Rongchuan, Shanghai 200120 (CN); LI, Yang, Shanghai 200120 (CN); HAN, Qing, Shanghai 200120 (CN)
(74) Representative: Sach, Greg Robert
(86) International application number: PCT/CN2021/078499
(87) International publication number: WO 2022/126863

(57) **Abstract**

The disclosure provides a read-write separation and automatic scaling-based cloud arrangement system and method. Thus, a read operation and a write operation are separated. Capacity expansion and capacity reduction are performed on a cluster. All index data is stored in corresponding object storage. A pre-computing module submits resources (memory and CPU) required by a computing task to an automatic scaling module. Resource creation is performed by invoking API corresponding to an infrastructure automated arrangement tool Terraform, to guarantee the operation of a construction task. The automatic scaling module provides two resource expansion strategies, which are based on time and the maximum number of waiting tasks. According to the disclosure, the utilization rate of cloud resources is increased, costs are lowered, and manual intervention is reduced. Therefore, higher reliability is provided for the horizontal expansion of a query cluster, the stability of a system during high concurrency is enhanced, and the safety and infinite scalability of data are guaranteed.

## Description

### Cross-Reference to Related Application

The disclosure claims priority to Chinese patent application No. 2020114922202, entitled "READ-WRITE SEPARATION AND AUTOMATIC SCALING-BASED CLOUD ARRANGEMENT SYSTEM AND METHOD", filed to the China National Intellectual Property Administration on December 16, 2020, the disclosure of which is hereby incorporated by reference in its entirety.

### Technical Field

The disclosure relates to the technical field of cloud arrangement, and in particular, to a read-write separation and automatic scaling-based cloud arrangement system and method.

### Background

At present, hot issues that cloud services are concerned about all the time are how to reduce cloud costs and rapidly respond service requirements. Currently, most cloud services support node scaling services to operate corresponding tasks. However, the quantity of nodes need to be manually adjusted by an operator, which often causes resource waste, thereby increasing Total Cost of Ownership (TCO) and operation and maintenance costs.

Most cloud services in the industry externally provide api exposed to a cloud arrangement tool (Terraform). Through the Terraform, a cloud service cluster can be flexibly and rapidly deployed, which is also a common method in the industry.

A current cloud arrangement tool provides capabilities of creating and managing cloud resources, but cannot automatically perform flexible resource configuration according to load conditions of a cloud operation at that time. SDK provided based on the cloud services cannot flexibility and automatically perform resource adjustment as well according to the cloud operation, which may cause the increasing of TCO.

Currently, conventional cloud computing engines supported in the industry include Impala, Greenplum and the like. The query performance and concurrency of these conventional MPP engines may be severely reduced under large-scale data volume. Except that an MPP engine process is real-time operation, a main reason lies in that, if one node of MPP is always slower than other nodes in a cluster, the performance of the entire cluster may be limited to the performing speed of this failure node (a so-called cask effect of a barrel). No matter how many nodes the cluster has, there will be no improvement.

Since the defects of a conventional cloud arrangement technology and MPP architecture, it is hard to rapidly respond to cloud operation loads.

### Summary

In view of the above, the disclosure provides a read-write separation and automatic scaling-based cloud arrangement system and method. According to the flexibility of operations, the operations may be completed by using reasonable resources, and TCO may be effectively reduced. The following technical solutions are provided.

One the first aspect, the disclosure provides a read-write separation and automatic scaling-based cloud arrangement system. The system includes a client visualization module, a pre-computing engine module, a read-write separation module, and an automatic scaling module. The client visualization module is configured to visually set the number of task nodes and submit a task to the pre-computing engine module. The pre-computing engine module is configured to utilize an On-Line Analytical Processing (OLAP) technology to perform multidimensional analysis on the task submitted by the client visualization module according to OLAP analysis requirements of services construct original detail data in a data warehouse into a multidimensional data set, so as to provide aggregated data required by OLAP query. The read-write separation module is configured to realize isolation of read-write workloads of the task submitted by the client visualization module. The automatic scaling module is configured to respond a resource application request of the pre-computing engine module and dynamically apply and delete resources from the cloud.

Further, the client visualization module is accessed through a browser.

Further, the pre-computing engine module adopts an OLAP modeling tool kylin.

Further, in the read-write separation module, a query cluster performs a distributed query read operation, a construction cluster performs an index construction write operation, and index data is stored in corresponding object storage.

Further, the automatic scaling module includes cloud server expansion and reduction functions. Two resource expansion strategies are provided, which are based on time and the maximum number of waiting tasks, so that one of the expansion strategies triggers an expansion operation. If it is in a space state, a reduction operation is triggered.

On the second aspect, the disclosure provides a read-write separation and automatic scaling-based cloud arrangement method. The method is applied to the above read-write separation and automatic scaling-based cloud arrangement system. The method includes the following steps.

At step 1, a client visualization module sets a task.

At step 2, a pre-computing engine module analyzes resource requirements of the task, and a read-write separation module analyzes read-write requirements of the task.

At step 3, an automatic scaling module performs resource creation or resource recycling according to the resource requirements of the task.

At step 4, the read-write separation module performs a read operation or a write operation according to the read-write requirements of the task.

Further, step 1 of setting the task comprises the following detailed steps.

At step 1.1, the maximum number of task server nodes and a server model are set.

At step 1.2, the logical concepts of the server nodes in step 1.1 are converted into server entities.

At step 1.3, a model operation is performed on the pre-computing engine module by using the client visualization module.

At step 1.4, a construction model task is triggered.

Further, in step 2 of analyzing task requirements, the pre-computing engine module submits resources required by a computing task to the automatic scaling module, and the read-write separation module analyzes the read-write requirements of the task to perform read-write separation.

Further, in step 3, resource creation is performed by invoking API corresponding to an infrastructure automated arrangement tool Terraform, and resource recycling is performed according to a resource recycling strategy.

Further, the model operation of step 1.3 includes creating an editing model and setting indexes.

On the third aspect, the disclosure provides a read-write separation and automatic scaling-based cloud arrangement method. The method includes the following operations.

A pre-computing engine module receives a task submitted by a client visualization module, and analyzes task requirements.

Read-write separation is performed on the submitted task by using a read-write separation module.

If it is a read request, a read module of the read-write separation module reads required information from object storage.

If it is a write request, a write module of the read-write separation module performs dynamic creation or destroying on resources by using an automatic scaling module, and performs result storage of a write operation.

Further, the operation of performing, by the write module of the read-write separation module, resource creation or destroying by using the automatic scaling module includes the following operations.

After the pre-computing engine module calculates the resource requirements of a task, an application of the resource requirements is submitted to the automatic scaling module.

The automatic scaling module dynamically applies resources from a cloud or destroying the resources according to the resource requirements.

Further, the operation of dynamically applying, by the automatic scaling module, resources from the cloud or destroying the resources according to the resource requirements includes the following operations.

Resource creation is performed by invoking API corresponding to an infrastructure automated arrangement tool Terraform. A creation strategy includes performing resource expansion according to a resource expansion strategy. The resource expansion strategy includes a time-based strategy and/or maximum-based number of waiting tasks.

Resource recycling is performed according to a reduction strategy. The reduction strategy includes determining whether a working node is in an idle state according to the API of a cluster to determine whether resource recycling is triggered.

Further, the method further includes the following operation.

The maximum number of task server nodes and a server model set by the client visualization module are obtained. The service nodes are converted into server entities through the cooperation of the pre-computing engine module and the automatic scaling module.

Further, all index data is stored in object storage.

Further, the method further includes the following operation.

The pre-computing engine module adopts an OLAP modeling tool kylin.

On the fourth aspect, the disclosure provides a read-write separation and automatic scaling-based cloud arrangement device. The device includes a task receiving unit, a separation unit, a read request processing unit, and a write request processing unit.

The task receiving unit is configured to receive, by a pre-computing engine module, a task submitted by a client visualization module, and analyze task requirements.

The separation unit is configured to perform read-write separation on the submitted task by using a read-write separation module.

The read request processing unit is configured to, if it is a read request, read, by a read module of the read-write separation module, required information from object storage.

The write request processing unit is configured to, if it is a write request, perform, by a write module of the read-write separation module, dynamic creation or destroying on resources by using an automatic scaling module, and perform result storage of a write operation.

On the fifth aspect, the disclosure provides a read-write separation and automatic scaling-based cloud arrangement system. The system includes a client, a server, and a cloud.

The client is configured to set the number of server nodes and a server model. The client is further configured to perform model operation, and trigger a construction model task to obtain a task of a pre-computing engine module that is required to be submitted to the server.

The server is configured to perform the above read-write separation and automatic scaling-based cloud arrangement method in the third aspect.

The cloud is configured to receive a resource application of the server to provide cloud resources for the server.

The disclosure provides a read-write separation and automatic scaling-based cloud arrangement system and method. An automatic scaling scheme of a cloud server during cloud operation is provided, so that the utilization rate of cloud resources is increased, TCO is lowered, and manual intervention is reduced. The separation of query and computing cluster resources provides higher reliability for the horizontal expansion of a query cluster. Constructed data is stored in object storage with high reliability, so that the stability of a system during high concurrency is enhanced, and the safety and infinite scalability of data are guaranteed. Based on the disclosure, an efficient OLAP query execution engine with read-write separation and automatic scaling may be constructed, so as to deal with complex OLAP query of various reporting systems.

### Brief Description of the Drawings

In order to more clearly illustrate the specific implementations of the disclosure or the technical solutions in the related art, the drawings used in the description of the specific implementations or the related art will be briefly described below. It is apparent that the drawings in the following descriptions are only some implementations of the disclosure. Other drawings can be obtained from those skilled in the art according to these drawings without any creative work.
Fig. 1 is a schematic diagram of a read-write separation and automatic scaling-based cloud arrangement system according to the disclosure.
Fig. 2 is a schematic diagram of a read-write separation and automatic scaling-based cloud arrangement method according to the disclosure.
Fig. 3 is a schematic flowchart of an entire scheme according to specific embodiments of the disclosure.
Fig. 4 is a schematic diagram of another read-write separation and automatic scaling-based cloud arrangement method according to the disclosure.

### Detailed Description of the Embodiments

In order to enable those skilled in the art to better understand the solutions of this application, the technical solutions in the embodiments of this application will be clearly and completely described below in combination with the drawings in the embodiments of this application. It is apparent that the described embodiments are only part of the embodiments of this application, not all the embodiments. All other embodiments obtained by those of ordinary skill in the art on the basis of the embodiments in this application without creative work shall fall within the scope of protection of this application.

It is to be noted that terms "first", "second" and the like in the description, claims and the above mentioned drawings of this application are used for distinguishing similar objects rather than describing a specific sequence or a precedence order. It should be understood that the data used in such a way may be exchanged where appropriate, in order that the embodiments of this application described here can be implemented. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

In this application, orientation or position relationships indicated by terms "upper", "lower", "left", "right", "front", "back", "top", "bottom", "inside", "outside", "in", "vertical", "horizontal", "transverse", "longitudinal" and the like are orientation or position relationships shown in the drawings. These terms are mainly used to better describe this application and its embodiments, rather than limit that the indicated devices, components and constituting parts must be in specific orientations or structured and operated in the specific orientations.

Furthermore, the above mentioned part of terms may be not only used to represent the orientation or position relationships, but used to represent other meanings, for example, term "on" may be used to represent certain relationship of dependence or connection relationship in some cases. For those of ordinary skill in the art, specific meanings of these terms in this application may be understood according to a specific condition.

In addition, the term "a plurality of" shall refer to two or more than two.

It is to be noted that the embodiments in this application and the features in the embodiments may be combined with one another without conflict. The disclosure will now be described below in detail with reference to the drawings and the embodiments.

The implementations of the disclosure are described through specific embodiments below. Those skilled in the art can easily understand advantages and effects of the disclosure from content disclosed in this specification. It is apparent that the embodiments described herein are only a part of the embodiments of the disclosure, rather than all of the embodiments. The disclosure may be implemented or applied through other various specific implementations, and various modifications and changes may be made to details in this specification based on different opinions and applications without departing from a spirit and scope of the disclosure. It is to be noted that the embodiments and the features in the embodiments may be combined with one another without conflict. Based on the embodiments in the present invention, all other embodiments obtained by those of ordinary skilled in the art without creative work shall fall within the protection scope of the present invention.

### Embodiment I

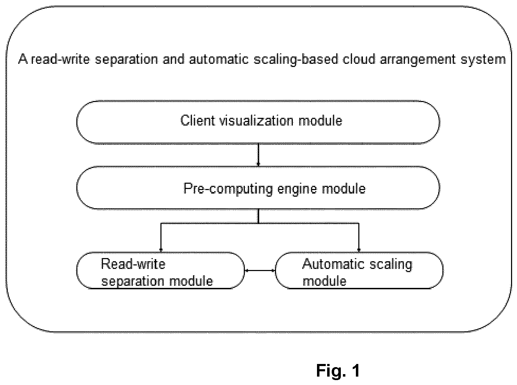

Embodiment I of the disclosure provides a read-write separation and automatic scaling-based cloud arrangement system. As shown in Fig. 1, the system includes a client visualization module, a pre-computing engine module, a read-write separation module, and an automatic scaling module. The client visualization module is configured to visually set the number of task nodes and submit a task to the pre-computing engine module. The pre-computing engine module is configured to utilize an OLAP technology to perform multidimensional analysis on the task submitted by the client visualization module according to OLAP analysis requirements of services construct original detail data in a data warehouse into a multidimensional data set, so as to provide aggregated data required by OLAP query. The read-write separation module is configured to realize isolation of read-write workloads of the task submitted by the client visualization module. The automatic scaling module is configured to respond a resource application request of the pre-computing engine module and dynamically apply and delete resources from the cloud.

The client visualization module is accessed through a browser.

The pre-computing engine module adopts an OLAP modeling tool kylin, so that the query efficiency of aggregation queries is enhanced.

In the read-write separation module, a query cluster performs a distributed query read operation, a construction cluster performs an index construction write operation, and index data is stored in corresponding object storage.

Through read-write separation, two workloads of a read operation and a write operation are completely separated, so that capacity expansion and capacity reduction are conveniently performed on a cluster. All index data is stored in corresponding object storage rather than a self-contained disk of a corresponding machine, therefore the infinite scalability of data on safety, redundancy and capacity is guaranteed. Thus, when computing is not required, the cluster may be even safely stopped without about losing data. By means of an architecture of read-write separation, concurrency query with high performance can be achieved by randomly expanding query nodes, and in addition, a situation that a construction task preempts cluster resources does not need to be worried.

The automatic scaling module includes cloud server expansion and reduction functions. Two resource expansion strategies are provided, which are based on time and the maximum number of waiting tasks. The automatic scaling module detects a waiting state of a current task, compares whether task waiting dispatching time exceeds the maximum waiting time configuration item in module configuration files, and simultaneously compares whether the current number of waiting task is greater than the maximum number of the waiting tasks configured by the configuration files. An expansion operation may be triggered if one of the expansion strategies is met. The automatic scaling module obtains a current working node through API invoking, and determines whether it is in an idle state. If it is in the idle state, a node reduction operation may be triggered.

### Embodiment II

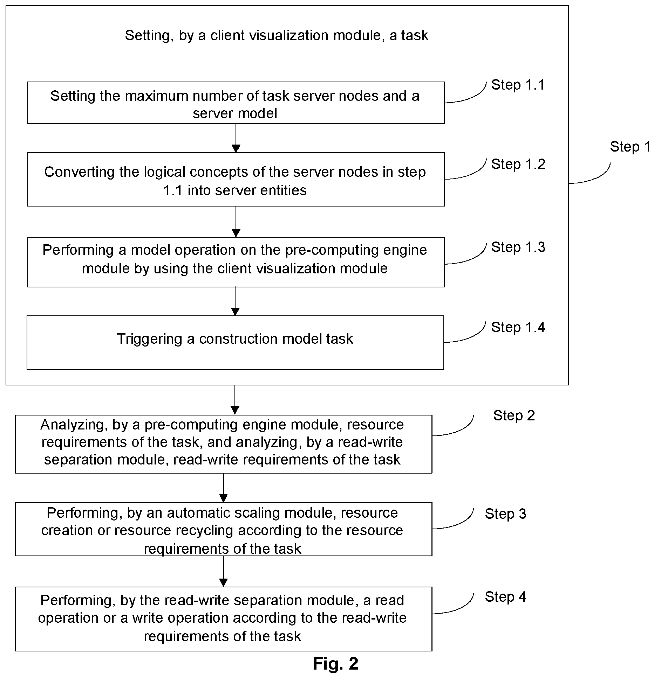

Embodiment II of the disclosure provides a read-write separation and automatic scaling-based cloud arrangement method. The method is applied to the above read-write separation and automatic scaling-based cloud arrangement system. As shown in Fig. 2, the method includes the following steps.

At step 1, a client visualization module sets a task.

Detailed steps include as follows.

At step 1.1, a corresponding link is accessed by using a browser to enter a cluster setting page, and the maximum number of task server nodes and a server model are set. In this case, the task server nodes are logical concepts.

At step 1.2, through the common cooperation of a pre-computing task of a pre-computing engine module and an automatic scaling strategy of an automatic scaling module, the task server nodes in step 1.1 are converted into server entities. During specific implementation, the generation and dispatching of a construction task are performed through the browser or by invoking the API of the construction task. The pre-computing engine module calculates resources required by the construction task. The resources required by the pre-computing engine module are obtained by using the automatic scaling module. In case of the meeting of an expansion strategy of automatic scaling, the creation of the required resources is completed by invoking Terraform API.

At step 1.3, a model operation is performed on the pre-computing engine module on an interface by using a client visualization module. During specific implementation, the model operation in step 1.3 may include but not limited to the creation of an editing model and the setting of indexes.

At step 1.4, a construction model task is triggered.

At step 2, the pre-computing engine module analyzes resource requirements of a task, and a read-write separation module analyzes read-write requirements of the task.

During specific implementation, in step 2 of analyzing the resource requirements of the task, the pre-computing engine module submits resources, including memory and CPU, required by a computing task to the automatic scaling module. The read-write separation module analyzes the read-write requirements of the task to perform read-write separation.

At step 3, an automatic scaling module performs resource creation or resource recycling according to the resource requirements of the task.

During specific implementation, resource creation is performed by invoking API corresponding to an infrastructure automated arrangement tool Terraform, to guarantee the operation of the construction task. Resource recycling is performed according to a resource recycling strategy. By acquiring whether a cluster working node is in the idle state, a reduction operation is triggered if yes, so that resource waste may be avoided.

At step 4, the read-write separation module performs a read operation or a write operation according to the read-write requirements of the task.

### Embodiment III

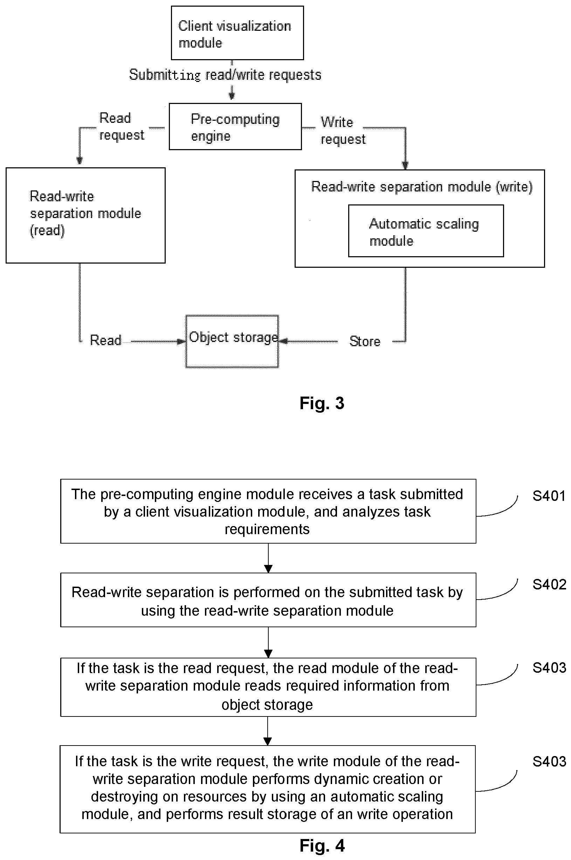

In a specific implementation of the disclosure, a read-write separation and automatic scaling-based cloud arrangement system is provided. The flow of an entire scheme is shown in Fig. 3. A client visualization module submits a read-write request to a pre-computing engine module, may including a read request or a write request, or a combination of the read request and the write request. The pre-computing engine module analyzes task requirements, separates the read request and the write request to respectively send to a read module and a write module of a read-write separation module, so as to perform read-write separation. A read operation reads required information from object storage. A write operation creates resources according to needs by using an automatic scaling module. Resource recycling is performed according to a resource recycling strategy. In this way, the resources are reasonably utilized. Information on which the write operation is performed is stored in object storage.

### Embodiment IV

An embodiment of the disclosure provides a read-write separation and automatic scaling-based cloud arrangement method. As shown in Fig. 4, the method includes the following steps.

Firstly, it is to be noted that, the method is applied to a server. The server corresponds to a visual client. The server may be understood to be a rear terminal of a management cluster. The visual client may be understood to be a front terminal of the management cluster. The server includes a pre-computing engine module, a read-write separation module, and an automatic scaling module.

At S401, the pre-computing engine module receives a task submitted by a client visualization module, and analyzes task requirements.

Before this step, a user may firstly set the maximum number of task server nodes and a server model by using the client visualization module (the visual client). Specifically, a corresponding link is accessed through a browser to enter the visual client, to perform setting. In addition, it is to be noted that, the disclosure relates to the setting of a cluster, that is to say, the visual client may be a cluster setting page in practical application.

Service nodes set here are still logical concepts. The service nodes need to be converted into server entities through the cooperation of the pre-computing engine module and the automatic scaling module. Then, model operation is performed in the visual client. A construction model task is triggered to obtain a task of the pre-computing engine module that is required to be submitted to the server. It is to be noted that, the model operation includes but is not limited to the creation of an editing model, and the setting of indexes.

After a task is obtained, the task is submitted to the pre-computing engine module. In this way, the pre-computing engine module may receive the task submitted by the client visualization module (the visual client).

After receiving the submitted task, the pre-computing engine module may perform requirement analysis on the task. The analysis operation includes analyzing whether the submitted task is a read request or a write request or both; and analyzing resources required by the task. The required resources include memory and CPU.

At S402, read-write separation is performed on the submitted task by using the read-write separation module.

Specific implementation includes: if the task is the read request, classifying the task to a read module of the read-write separation module to process; and if the task is a write request, classifying the task into a write module of the read-write separation module to process.

At S403, if the task is the read request, the read module of the read-write separation module reads required information from object storage.

It is to be noted that, in the disclosure, index data is stored in the corresponding object storage rather than a self-contained disk of a corresponding machine. Thus, for the read request, the required information is required to be read from the object storage. By storing the index data in the object storage, the infinite scalability of data on safety, redundancy and capacity is guaranteed. Thus, when computing is not required, the cluster may be even safely stopped without about losing data.

At S404, if the task is the write request, the write module of the read-write separation module performs dynamic creation or destroying on resources by using an automatic scaling module, and performs result storage of a write operation.

A specific implementation of "performing, by the write module of the read-write separation module, dynamic creation or destroying on resources by using the automatic scaling module" may include: after the pre-computing engine module calculates the resource requirements of a task, submitting an application of the resource requirements to the automatic scaling module; and dynamically applying, by the automatic scaling module, resources from the cloud or destroying the resources according to the resource requirements.

The operation of "dynamically applying, by the automatic scaling module, resources from the cloud or destroying the resources according to the resource requirements" includes: performing resource creation by invoking API corresponding to an infrastructure automated arrangement tool Terraform, and performing resource expansion according to a resource expansion strategy. The resource expansion strategy includes a time-based expansion strategy and/or maximum-based number of waiting tasks. Resource recycling is performed according to a resource reduction strategy. The resource reduction strategy includes judging whether a working node is in an idle state according to the API of a cluster to determine whether resource recycling is triggered.

It is to be noted that, resource creation performed by invoking the API corresponding to the infrastructure automated arrangement tool Terraform is to guarantee the operation of the task. Resource creation corresponds to an application of resources from a cloud.

Resource recycling is performed according to the resource recycling strategy, so that resource waste can be avoided.

The specific operation to perform result storage of the write operation is to write into the object storage.

Based on the above description, it may be learned from that, according to the read-write separation and automatic scaling-based cloud arrangement method in this embodiment of the disclosure, a cloud arrangement-based read-write separation and resource automatic scaling scheme may be provided. According to the flexibility of operations, reasonable resources may be used to complete the operations, and therefore TCO can be effectively reduced. In addition, the separation of query (read) and computing (write) cluster resources provides higher reliability for the horizontal expansion of a query cluster, so that the stability of a system during high concurrency may be guaranteed.

It is to be further noted that, the pre-computing engine module in the above embodiment adopts an OLAP modeling tool kylin. Specifically, according to OLAP analysis requirements (which dimension measures need to be analyzed) of services, original detail data in a data warehouse is constructed into Cube, to provide aggregated data required by OLAP query. Using kylin is to enhance the query efficiency of aggregation queries.

### Embodiment V

An embodiment of the disclosure provides a read-write separation and automatic scaling-based cloud arrangement device. The device includes a task receiving unit, a separation unit, a read request processing unit, and a write request processing unit.

The task receiving unit is configured to receive, by a pre-computing engine module, a task submitted by a client visualization module, and analyze task requirements.

The separation unit is configured to perform read-write separation on the submitted task by using a read-write separation module.

The read request processing unit is configured to, if it is a read request, read, by a read module of the read-write separation module, required information from object storage.

The write request processing unit is configured to, if it is a write request, perform, by a write module of the read-write separation module, dynamic creation or destroying on resources by using an automatic scaling module, and perform result storage of a write operation.

In the specific embodiment, the implementation of various unit modules may refer to descriptions corresponding to the foregoing embodiments. Therefore, details are not repeated again herein.

According to the read-write separation and automatic scaling-based cloud arrangement device in this embodiment of the disclosure, a cloud arrangement-based read-write separation and resource automatic scaling scheme may be provided. According to the flexibility of operations, reasonable resources may be used to complete the operations, and therefore TCO can be effectively reduced. In addition, the separation of query (read) and computing (write) cluster resources provides higher reliability for the horizontal expansion of a query cluster, so that the stability of a system during high concurrency may be guaranteed.

### Embodiment VI

An embodiment of the disclosure provides a read-write separation and automatic scaling-based cloud arrangement system. The system includes a client, a server, and a cloud.

The client is configured to set the number of server nodes and a server model. The client is further configured to perform model operation, and trigger a construction model task to obtain a task of a pre-computing engine module that is required to be submitted to the server.

The server is configured to perform the above read-write separation and automatic scaling-based cloud arrangement method in the above Embodiment IV.

The cloud is configured to receive a resource application of the server to provide cloud resources for the server.

Specifically, in the specific embodiment, the implementation of various modules may refer to descriptions corresponding to the foregoing embodiments. Therefore, details are not repeated again herein.

According to the read-write separation and automatic scaling-based cloud arrangement system in this embodiment of the disclosure, a cloud arrangement-based read-write separation and resource automatic scaling scheme may be provided. According to the flexibility of operations, reasonable resources may be used to complete the operations, and therefore TCO can be effectively reduced. In addition, the separation of query (read) and computing (write) cluster resources provides higher reliability for the horizontal expansion of a query cluster, so that the stability of a system during high concurrency may be guaranteed.

The above are only the preferred embodiments of this application and are not intended to limit this application. For those skilled in the art, this application may have various modifications and variations. Any modifications, equivalent replacements, improvements and the like made within the spirit and principle of this application shall fall within the scope of protection of this application.

Although the implementations of the disclosure are described with reference to the accompanying drawings, those skilled in the art can make various modifications and variations to the disclosure without departing from the spirit and scope of the disclosure. Thus, such modifications and variations of the disclosure fall within the scope of the appended claims.

## Claims

1. A read-write separation and automatic scaling-based cloud arrangement system, comprising a client visualization module, a pre-computing engine module, a read-write separation module, and an automatic scaling module, wherein the client visualization module is configured to visually set the number of task nodes and submit a task to the pre-computing engine module, the pre-computing engine module utilizes an On-line Analytical Processing (OLAP) technology to perform multidimensional analysis on the task submitted by the client visualization module, to construct original detail data in a data warehouse into a multidimensional data set, so as to provide aggregated data required by OLAP query, the read-write separation module is configured to realize isolation of read-write workloads of the task submitted by the client visualization module, and the automatic scaling module is configured to respond a resource application request of the pre-computing engine module and dynamically apply and delete resources from the cloud.

2. The read-write separation and automatic scaling-based cloud arrangement system as claimed in claim 1, wherein the client visualization module is accessed through a browser.

3. The read-write separation and automatic scaling-based cloud arrangement system as claimed in claim 1, wherein the pre-computing engine module adopts an OLAP modeling tool kylin.

4. The read-write separation and automatic scaling-based cloud arrangement system as claimed in claim 1, wherein, in the read-write separation module, a query cluster performs a distributed query read operation, a construction cluster performs an index construction write operation, and index data is stored in corresponding object storage.

5. The read-write separation and automatic scaling-based cloud arrangement system as claimed in claim 1, wherein the automatic scaling module comprises cloud server expansion and reduction functions, two resource expansion strategies are provided, which are based on time and the maximum number of waiting tasks, so that one of the expansion strategies triggers an expansion operation; and if it is in a space state, a reduction operation is triggered.

6. A read-write separation and automatic scaling-based cloud arrangement method, being applied to the read-write separation and automatic scaling-based cloud arrangement system as claimed in any of claims 1 to 5, wherein the method includes the following steps:
step 1: setting, by a client visualization module, a task;
step 2: analyzing, by a pre-computing engine module, resource requirements of the task, and analyzing, by a read-write separation module, read-write requirements of the task;
step 3: performing, by an automatic scaling module, resource creation or resource recycling according to the resource requirements of the task; and
step 4: performing, by the read-write separation module, a read operation or a write operation according to the read-write requirements of the task.

7. The read-write separation and automatic scaling-based cloud arrangement method as claimed in claim 6, wherein the task set in step 1 comprises the following steps:
step 1.1: setting the maximum number of task server nodes and a server model;
step 1.2: converting the logical concepts of the server nodes in step 1.1 into server entities;
step 1.3: performing an model operation on the pre-computing engine module by using the client visualization module; and
step 1.4: triggering a construction model task.

8. The read-write separation and automatic scaling-based cloud arrangement method as claimed in claim 6, wherein analyzing task requirements in step 2 comprises: submitting, by the pre-computing engine module, resources required by a computing task to the automatic scaling module, and analyzing, by the read-write separation module, the read-write requirements of the task to perform read-write separation.

9. The read-write separation and automatic scaling-based cloud arrangement method as claimed in claim 6, wherein step 3 comprises: performing resource creation by invoking api corresponding to an infrastructure automated arrangement tool Terraform, and performing resource recycling according to a resource recycling strategy.

10. The read-write separation and automatic scaling-based cloud arrangement method as claimed in claim 7, wherein the model operation in step 1.3 comprises creating an editing model and setting indexes.

11. A read-write separation and automatic scaling-based cloud arrangement method, comprising:
receiving, by a pre-computing engine module, a task submitted by a client visualization module, and analyzing task requirements;
performing read-write separation on the submitted task by using a read-write separation module;
if it is a read request, reading, by a read module of the read-write separation module, required information from object storage; and
if it is a write request, performing, by a write module of the read-write separation module, dynamic creation or destroying on resources by using an automatic scaling module; and performing result storage of an write operation.

12. The read-write separation and automatic scaling-based cloud arrangement method as claimed in claim 11, wherein that performing, by the write module of the read-write separation module, resource creation or destroying by using the automatic scaling module comprises:
after the pre-computing engine module calculates the resource requirements of a task, submitting an application of the resource requirements to the automatic scaling module; and
dynamically applying, by the automatic scaling module, resources from a cloud or destroying the resources according to the resource requirements.

13. The read-write separation and automatic scaling-based cloud arrangement method as claimed in claim 12, wherein that dynamically applying, by the automatic scaling module, resource from the cloud or destroying the resources according to the resource requirements comprises:
performing resource creation by invoking API corresponding to an infrastructure automated arrangement tool Terraform, a creation strategy comprising performing resource expansion according to a resource expansion strategy, and the resource expansion strategy comprising a time-based expansion strategy and/or maximum-based number of waiting tasks; and performing resource recycling according to a reduction strategy, the reduction strategy comprising judging whether a working node is in an idle state according to the API of a cluster to determine whether resource recycling is triggered.

14. The read-write separation and automatic scaling-based cloud arrangement method as claimed in claim 11, wherein further comprising:
obtaining the maximum number of task server nodes and a server model set by the client visualization module, and converting the service nodes into server entities through the cooperation of the pre-computing engine module and the automatic scaling module.

15. The read-write separation and automatic scaling-based cloud arrangement method as claimed in claim 11, wherein all index data is stored in object storage.

16. The read-write separation and automatic scaling-based cloud arrangement method as claimed in claim 11, wherein the method further comprises:
adopting, by the pre-computing engine module, an OLAP modeling tool kylin.

17. A read-write separation and automatic scaling-based cloud arrangement device, comprising:
a task receiving unit, configured to receive, by a pre-computing engine module, a task submitted by a client visualization module, and analyze task requirements;
a separation unit, configured to perform read-write separation on the submitted task by using a read-write separation module;
a read request processing unit, configured to, if it is a read request, read, by a read module of the read-write separation module, required information from object storage; and
a write request processing unit, configured to, if it is a write request, perform, by a write module of the read-write separation module, dynamic creation or destroying on resources by using an automatic scaling module; and perform result storage of an write operation.

18. A read-write separation and automatic scaling-based cloud arrangement system, wherein the system comprises a client, a server, and a cloud;
the client is configured to set the number of server nodes and a server model; and the client is further configured to performing model operation, and trigger a construction model task to obtain a task of a pre-computing engine module that is required to be submitted to the server;
the server is configured to perform the read-write separation and automatic scaling-based cloud arrangement method as claimed in any of claims 11 to 16; and
the cloud is configured to receive a resource application of the server to provide cloud resources for the server.
